# EUROPÄISCHE PATENTSCHRIFT

(11) **EP 1 808 345 B1**
(45) Veröffentlichungstag und Bekanntmachung des Hinweises auf die Patenterteilung: **31.03.2010**
(21) Anmeldenummer: 07100008.7
(22) Anmeldetag: 02.01.2007
(51) Int. Cl.: B60S 1/04

(54) **Scheibenwischvorrichtung für ein Kraftfahrzeug**
Windshield wiper device for a motor vehicle
Dispositif d'essuie-glace de véhicule automobile

(30) Priorität: 13.01.2006 DE 102006001963; 30.03.2006 DE 102006015220
(43) Veröffentlichungstag der Anmeldung: 18.07.2007
(73) Patentinhaber: ROBERT BOSCH GMBH, 70442 Stuttgart (DE)
(72) Erfinder: Metz, Ulrich, 77855 Achern (DE)

(56) Entgegenhaltungen:
- EP-A2- 1 270 350
- WO-A-02/04263
- DE-A1- 3 116 821
- DE-A1- 19 809 630

## Beschreibung

### Stand der Technik

Die Erfindung betrifft eine Scheibenwischvorrichtung, insbesondere für ein Kraftfahrzeug nach Gattung des unabhängigen Anspruchs.

Aus der DE-A-198 09 630 ist eine Scheibenwischvorrichtung bekannt, die ein erstes Befestigungsmittel, ein zweites Befestigungsmittel und ein drittes Befestigungsmittel auf weist, mit denen die Scheibenwischvorrichtung an der Karosserie des Kraftfahrzeugs befestigt ist. Zwischen dem ersten und dem zweiten Befestigungsmittel ist hierzu eine Platine angeordnet, die die wesentlichen Komponenten, beispielsweise den Antrieb und die Wischerlager mit den Wischerwellen, der Scheibenwischvorrichtung trägt. Das dritte Befestigungsmittel ist hierbei außerhalb der durch das erste und zweite Befestigungsmittel gebildeten Achse im Bereich des Antriebs der Scheibenwischvorrichtung angeordnet. Es weist darüber hinaus ein Verstellmittel zur Verkippung der Platine um einen Kippwinkel um die durch das erste und zweite Befestigungsmittel gebildete Achse auf. Hierzu ist als Verstellmittel ein gewindeartiges Dämpfungselement vorgesehen, das mit der Platine zusammenwirkt. Durch Drehung des Dämpfungselements wird der Kippwinkel der Platine gegenüber der Karosserie des Kraftfahrzeugs verstellt, so dass sich der Winkel zwischen der Scheibe des Kraftfahrzeugs und der Pendelachse der Wischerwellen verändert, um ein optimales Wischbild zu erzielen.

Zur Fixierung des Kippwinkels ist ein Bolzen als Fixierungsmittel vorgesehen, der durch die Drehachse des Dämpfungselementes verläuft, so dass nach der Justage das Dämpfungselement fixiert wird und eine weitere Drehung des Dämpfungselementes und damit eine Änderung des Kippwinkels verhindert wird.

Durch das Verstellmittel können beispielsweise Fertigungstoleranzen, die aus der Herstellung der Karosserie resultieren, ausgeglichen werden.

Problematisch ist hierbei jedoch die relativ komplizierte Einstellung des Kippwinkels, da die Befestigung nach der Einstellung des Kippwinkels fixiert werden muss. Häufig kommt es bei der Fixierung des Dämpfungselementes wiederum zu Veränderung in der Einstellung, so dass eine Nachjustage des Kippwinkels erforderlich ist. Zur Vermeidung dessen kann Spezialwerkzeug verwendet werden, das ein Drehen des Dämpfungselementes während der Fixierung verhindert, so dass die Justage zuverlässig erhalten bleibt. Dies ist jedoch relativ aufwendig und kostenintensiv.

### Offenbarung der Erfindung

### Vorteile der Erfindung

Die erfindungsgemäße Scheibenwischvorrichtung mit den Merkmalen des Hauptanspruchs hat den Vorteil, dass das Fixierungsmittel außerhalb der Kippebene, im Wesentlichen senkrecht zur Kippebene, fixiert. Auf diese Weise wird eine Veränderung des Kippwinkels während der Fixierung zuverlässig verhindert.

Durch die in den Unteransprüchen aufgeführten Maßnahmen ergeben sich vorteilhafte Weiterbildungen und Verbesserungen der im Hauptanspruch angegebenen Merkmale.

Hierbei ist es von besonderem Vorteil, wenn die Fixierung durch eine Kraft erfolgt, deren Wirkrichtung mit der Kippebene einen nicht trivialen Winkel einschließt, im Wesentlichen senkrecht zur Kippebene wirkt.

Weiterhin ist es als vorteilhaft anzusehen, wenn ein Drehkörper vorgesehen ist, der zur Verkippung der Platine in der Kippebene drehbar ist.

Hierbei wird in einer einfachen Ausführung der Drehkörper kraft und/oder formschlüssig durch das Fixierungsmittel fixiert.

In einer besonders kostengünstigen Ausführung ist das Fixierungsmittel als Schraub-, Klipp-, Steck- oder Bügelverbindung ausgebildet, die mit einer Öffnung zusammenwirkt.

Besonders vorteilhaft ist, wenn das dritte Befestigungsmittel nur vorbestimmte Kippwinkel zulässt und Rastmittel zur Vorbestimmung der vorbestimmten Kippmittel vorgesehen sind. Hierdurch lassen sich die Kippwinkel besonders einfach einstellen.

Vorteilhafterweise sind hierbei die Rastmittel durch Rastnocken und Raststutzen gebildet.

Besonders vorteilhaft ist es hierbei, wenn Rastnocken und Raststutzen in der Kippebene gegeneinander bewegbar sind.

Weiterhin ist es als vorteilhaft anzusehen, wenn der Drehkörper ein Drehelement auf weist, das außerhalb der Drehachse des Drehkörpers angeordnet ist und mit der Platine in Wirkverbindung steht.

Besonders vorteilhaft ist es, wenn der Drehkörper eine Drehhilfe, insbesondere einen Hebel, aufweist, sodass eine einfache und leichte Justage ermöglicht ist.

### Zeichnungen

Ein Ausführungsbeispiel der Erfindung ist in den Zeichnungen dargestellt und in der nachfolgenden Beschreibung näher erläutert. Es zeigen:
- Figur 1: eine erfindungsgemäße Scheibenwischvorrichtung in einer perspektivischen Darstellung,
- Figur 2: eine erfindungsgemäße Scheibenwischvorrichtung in einer Seitenansicht,
- Figur 3: eine weitere Seitenansicht einer erfindungsgemäßen Scheibenwischvorrichtung und
- Figur 4: ein Befestigungsmittel einer erfindungsgemäßen Scheibenwischvorrichtung in einer Seitenansicht.

### Beschreibung des Ausführungsbeispiels

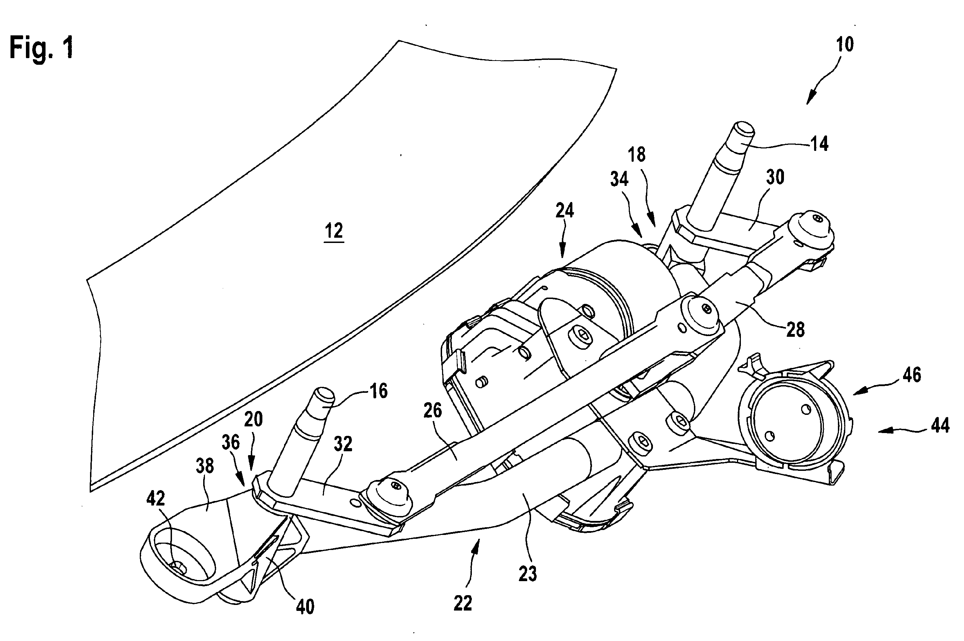

In Figur 1 ist eine erfindungsgemäße Scheibenwischvorrichtung 10 in montierter Position in einem Kraftfahrzeug gezeigt. Die Scheibenwischvorrichtung 10 ist vor einer Scheibe 12 angeordnet und an der Fahrzeugkarosserie, die hier aus Gründen der Übersichtlichkeit nicht gezeichnet ist, befestigt. Die Scheibenwischvorrichtung 10 weist eine erste Wischerwelle 14 sowie eine zweite Wischerwelle 16 auf, die aus der Karosserie des Kraftfahrzeugs herausragen und mit einer durch die Scheibe 12 gebildeten Ebene einen Kippwinkel α einschließen. Die Wischerwellen 14, 16 sind hierbei jeweils in einem ersten bzw. zweiten Wischerlager 18, 20 gelagert und durch eine Platine 22 miteinander verbunden, die ein Trägerrohr 23 umfasst. Am Trägerrohr 23 ist zwischen dem ersten Wischerlager 18 und dem zweiten Wischerlager 20 ein Wischermotor 24 als Antrieb befestigt, dessen Abtriebswelle über eine Mechanik aus Schubstangen 26, 28 und Kurbeln 30, 32 die Wischerwellen 14, 16 antreibt. Durch das Trägerrohr 23 ist dadurch die Platine 22 gebildet, die die wesentlichen Komponenten, wie den Antrieb 24 und die Wischerlager 18, 20, trägt.

Im Bereich des ersten Wischerlagers 18 und damit an einem Ende der Längserstreckung der Scheibenwischvorrichtung 10 ist das erste Befestigungsmittel 34 angeordnet und bildet damit einen ersten Befestigungspunkt, an dem die Platine 22 an der Karosserie befestigt ist. Im Bereich des zweiten Wischerlagers 20 und damit am anderen Ende der Längserstreckung der Scheibenwischvorrichtung 10, bzw. der Platine 22, ist das zweite Befestigungsmittel 36 angeordnet und bildet damit einen zweiten Befestigungspunkt für die Platine 22. Das zweite Befestigungsmittel 36, das im Wesentlichen gleich wie das erste Befestigungsmittel 34 ausgebildet ist, umfasst einen Befestigungsabschnitt 38, der einstückig mit einem die zweite Wischerwelle 16 lagernden, rohrförmigen Lagerabschnitt 40 des Wischerlagers 20 ausgebildet ist.

Der Befestigungsabschnitt 38 ist von im Wesentlichen länglicher Gestalt und an einem Ende seiner Längserstreckung am Lagerabschnitt 40 befestigt. Am anderen Ende des Befestigungsabschnitts 38 ist ein Befestigungsauge 42 angeordnet, mit Hilfe dessen ein insbesondere lösbares Befestigungselement, beispielsweise eine Schraube oder ein Dreh-und/oder Steckverschluss, zur Befestigung der Platine 22 der Scheibenwischvorrichtung 10 an der Karosserie des Kraftfahrzeugs vorgesehen werden kann. Zur Dämpfung von Schwingungen sind im Bereich des Befestigungsauges 42 Dämpfungselemente vorgesehen, die hier aus Gründen der Übersichtlichkeit nicht gezeichnet sind. Diese Dämpfungselemente ermöglichen auch eine leichte Verkippung der Platine 22.

Ist die Platine 22 der Scheibenwischvorrichtung 10 mit Hilfe des ersten und zweiten Befestigungsmittels 34, 36 und der Dämpfungselemente an der Karosserie des Kraftfahrzeugs befestigt, so kann die Platine 22 daher immer noch um eine durch die beiden Befestigungsmittel 34, 36 gebildete Achse in einer Kippebene E verkippt werden. Dieser Kippwinkel ist zwar relativ klein, er umfasst in der Regel nur wenige Grade, reicht aber aus, um Fertigungstoleranzen der Fahrzeugkarosserie und der Scheibenwischvorrichtung 10 auszugleichen. Ebenso können unterschiedliche Kippwinkel α für verschiedene Fahrzeugtypen vorgesehen und eingestellt werden.

Um ein ungewolltes Verkippen zu vermeiden und damit eine stabile Befestigung zu erzielen, ist ein drittes Befestigungsmittel 44 vorgesehen, das außerhalb der durch das erste Befestigungsmittel 34 und das zweite Befestigungsmittel 36 gebildeten Achse angeordnet ist. Entlang der Längserstreckung zwischen den Befestigungsmitteln 34, 36 der Scheibenwischvorrichtung ist das dritte Befestigungsmittel 44 im mittleren Drittel des Trägerrohrs 23, beispielsweise im Bereich des Wischermotors 24, angeordnet. Das dritte Befestigungsmittel 44 weist zur Einstellung des Kippwinkels α ein Verstellmittel 46 auf. Das Verstellmittel 46 ist hierbei derart ausgeführt, dass nur vorbestimmte Kippwinkel α1, α2 ..., αn ermöglicht sind.

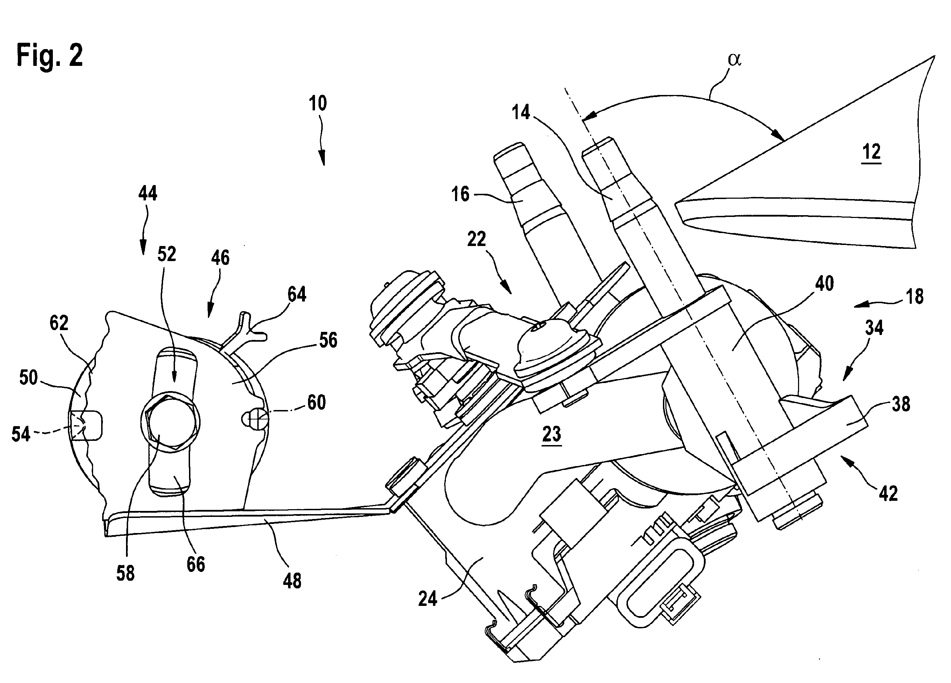

In Figur 2 ist die erfindungsgemäße Scheibenwischvorrichtung 10 sowie die Scheibe 12 in schematischer Seitenansicht gezeigt. Im Vordergrund ist das erste Wischerlager 18 mit dem Lagerabschnitt 40 und dem ersten Befestigungsmittel 34 zu sehen. Das erste Befestigungsmittel 34 umfasst den Befestigungsabschnitt 38 und das Befestigungsauge 42. Am Trägerrohr 23 ist im Bereich des Antriebs eine Befestigungsplatine 48 als Teil der Platine 22 angeordnet, an deren freiem Ende das dritte Befestigungsmittel 44 angeordnet ist. Das dritte Befestigungsmittel 44 umfasst hierbei das Verstellmittel 46 und ist über ein Entkopplungselement 52 mit der Fahrzeugkarosserie verbunden.

Das Verstellmittel 46 umfasst hierbei einen Drehkörper 50, der an der Karosserie derart befestigt ist, dass er in der Ebene des Kippwinkels α drehbar ist. Im Zentrum des Drehkörpers 50 ist hierbei ein Gewindebolzen als Fixierungsmittel 58 angeordnet. Dadurch kann der Drehkörper 50 gedreht werden, so dass sich eine Verstellung des Kippwinkels α ergibt. Durch Festziehen des Gewindebolzens 58 wird der Drehkörper 50 anschließend fixiert.

Weiterhin ist am Drehkörper 50 ein Raststutzen 54 ausgebildet, der in Rastnocken 56 eines Rastabschnittes 56 des Verstellmittels 46 eingreift. Der Rastabschnitt 56, ragt aus der Befestigungsplatine 48 der Platine 22 in der Ebene des Kippwinkels α heraus und ist als Blechabschnitt ausgebildet.

Ist der korrekte Kippwinkel eingestellt, kann der Gewindebolzen als Fixierungsmittel 58 festgezogen, mithin der Drehkörper 50 fixiert werden. Durch das Festziehen des Gewindebolzens 58 wirkt eine Kraft F senkrecht zur Kippebene, so dass der Drehkörper 50 eingeklemmt und damit kraftschlüssig fixiert ist. Der Rastabschnitt 56 schmiegt sich hierbei an den Drehkörper 50 seitlich in der Kippebene E an und weist ein, insbesondere gebogenes, Langloch auf, durch welches das den Drehkörper 50 tragende Fixierungsmittel 58 geführt ist.

Zur Einstellung der Kippwinkel weist der Drehkörper 50 ein Drehelement 60 auf, das senkrecht zur Kippebene E angeordnet ist. Dieses greift in eine Kerbe oder eine Öffnung als Eingriffelement 70 im Rastabschnitt 56 der Befestigungsplatine 48 ein.

Auf der dem Drehelement 60 bezüglich des Fixierungsmittels 58 gegenüberliegenden Seite ist der Raststutzen 54 am Drehkörper 50 befestigt. Dieser greift in Rastnocken 62 ein, welche mit dem Raststutzen 54 des Drehkörpers 50 korrespondieren. Zur leichteren Drehung des Drehkörpers 50 ist ein Hebel als Drehhilfe 64 angeordnet. Der Hebel 64 kann in einer Variation der Erfindung so angeordnet sein, dass aufgrund des Hebelgesetzes die Kraft zur Verstellung so dimensioniert ist, dass der Drehkörper 50 ohne Werkzeug durch den Monteur verdreht werden kann, wobei die Kraft durch den Raststutzen 54 und den Rastnocken 62 trotzdem so groß ist, dass ein zufälliges Verstellen vermieden wird.

Wird die Drehhilfe 64 betätigt, so wird der Drehkörper 50 in eine Drehung versetzt. Das Drehelement 60 bewegt sich dadurch auf einer Kreisbahn nach oben. Da das Drehelement 60 mit der Befestigungsplatine 48 verbunden ist, wird auch die Befestigungsplatine 46 nach oben gezogen, so dass sich der Kippwinkel α der Platine 22 ändert. Damit nur vorbestimmte Kippwinkel α einstellbar sind, kämmt der Raststutzen 54 die Rastnocken 62 des Rastabschnitts 56. Ist der gewünschte Kippwinkel α eingestellt, so kann das Fixierungsmittel 58, also die Schraube, festgezogen werden, so dass der eingestellte Kippwinkel α nicht mehr veränderbar ist. Um die Bewegung des Rastabschnitts 56, mithin der Befestigungsplatine 48, zu ermöglichen, ist im Rastabschnitt 56 im Bereich des Fixierungsmittels 58 das Langloch 66 vorgesehen, durch das das Fixierungsmittel 58 während des Drehvorgangs zu gleiten vermag. In einer Variation der Erfindung können die Rastnocken 62 und der Raststutzen 54 auch an einer anderen Stelle des Drehkörpers 50, beispielsweise am Langloch 66 oder im Bereich des Drehelementes 60, vorgesehen sein. In einer weiteren Variation der Erfindung kann das Fixierungsmittel 58 auch als Stift ausgebildet sein, der durch eine Öffnung im Drehkörper 50 und korrespondierende Öffnungen am Rastabschnitt 56 gefädelt wird. Die Fixierung erfolgt dann durch das Einschieben des Stiftes parallel zur Drehachse des Drehkörpers 50, mithin senkrecht zur Kippebene E des Kippwinkels α.

In einer weiteren Variation der Erfindung kann das Fixierungsmittel auch als Klipp ausgebildet sein, der beispielsweise in eine Kerbe des Drehkörpers 50 eingreift und somit formschlüssig eine Drehung des Drehkörpers 50 verhindert.

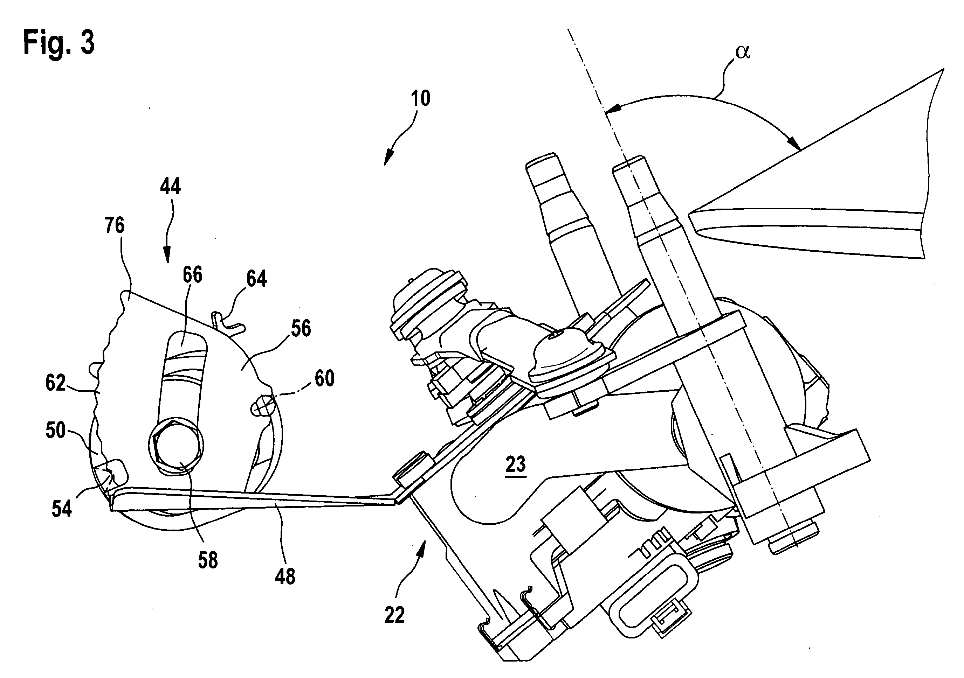

In Figur 3 ist die erfindungsgemäße Scheibenwischvorrichtung 10 mit dem dritten Befestigungsmittel 44 aus Figur 2 in einer anderen Winkelstellung gezeigt. Hierbei wurde durch den Hebel 64 der Drehkörper 50 in eine Extremposition verschoben. Der Drehkörper 50 wurde um seine Drehachse gegen den Uhrzeigersinn verdreht, so dass das Drehelement 60 ebenfalls gegen den Uhrzeigersinn nach oben verschoben wurde. Die Drehachse des Drehkörpers 50 verläuft hierbei genau durch das Fixierungsmittel 58, das den Drehkörper 50 trägt. Jedoch kann das Fixierungsmittel auch an anderer Stelle angeordnet sein und beispielsweise als Steck- oder Klemmelement ausgebildet sein. Der Raststutzen 54 ist bei der Drehung des Drehkörpers 50 entlang der Rastnocken 62 ebenso gegen den Uhrzeigersinn nach unten verschoben. Durch das nach oben verschobene Drehelement 60 wurde auch der Rastabschnitt 56 und dadurch auch die Befestigungsplatine 48 nach oben verschoben und damit der Kippwinkel α in seine Minimalposition verstellt.

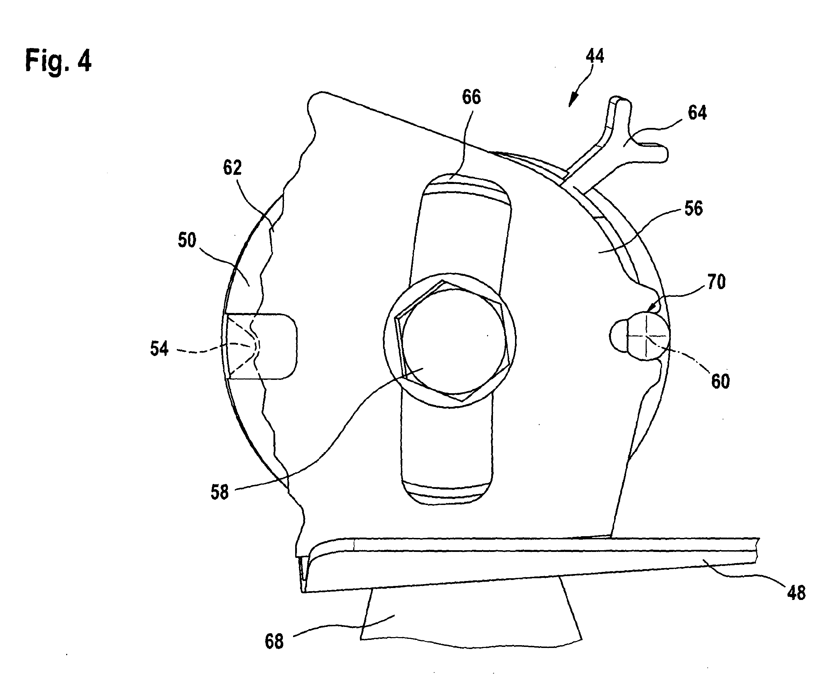

In Figur 4 ist das dritte Befestigungsmittel 44 im Detail dargestellt. Der Drehkörper 50 ist durch einen Befestigungsfuß 68 mit der Fahrzeugkarosserie verbunden. Der Befestigungsfuß 68 weist eine Öffnung auf, durch die die Schraube des Fixierungsmittels 58 verläuft und die den Drehkörper 50 trägt. Der mit der Befestigungsplatine 48 verbundene Rastabschnitt 56 ist über das Eingriffelement 70, das hier als Kerbe ausgebildet ist, drehbeweglich mit dem Drehelement 60 verbunden. Das Drehelement 60 ist exzentrisch am Drehkörper 50 angeordnet, so dass bei einer Drehung des Drehkörpers 50 um seine Drehachse eine Verschiebung des Drehelementes 60 stattfindet. Da das Drehelement 60 drehbeweglich mit dem Eingriffelement 70 verbunden ist, verschiebt sich bei einer Drehung des Drehkörpers 50 auch das Eingriffelement 70 des Rastabschnitts 56. Damit nur vorbestimmte Kippwinkel α einstellbar sind, ist auf der dem Drehelement 60 in der Drehebene von der Drehachse abgewandten Seite des Drehkörpers 50 der Raststutzen 54 angeordnet, der durch die Drehung des Drehkörpers über die Rastnocken 62 des Rastabschnitts 56 gleitet. Der Rastabschnitt 56 ist aus Blech ausgebildet. Der Raststutzen 54 ist aus Kunststoff ausgebildet, kann jedoch auch aus Metall, beispielsweise aus Blech, ausgebildet sein.

Das Fixierungsmittel 58 verhindert ein nachträgliches Verstellen des Kippwinkels und ermöglicht nach Einstellen des gewünschten Kippwinkels eine Fixierung. Das Fixierungsmittel 58 ist zwischen dem Drehelement 60 und dem Raststutzen 54 angeordnet. Der Drehkörper 50 trägt hierbei sowohl das Drehelement 60 als auch den Raststutzen 54. Die Richtung der Fixierung, also der Kraft, die die Fixierung bewirkt, wird hierbei senkrecht zur Ebene des Kippwinkels α ausgeübt, so dass die Justage bei der Fixierung erhalten bleibt.

Der gesamte Drehkörper 50 kann aus Kunststoff, insbesondere im Spritzgussverfahren, hergestellt sein. Insbesondere kann die Drehhilfe 64 auch einstückig mit dem Drehkörper 50 ausgebildet sein.

Auf dem Rastabschnitt 56 können auch Markierungen für die einzelnen Winkelstellungen, insbesondere für die Null- oder Mittelposition, angebracht sein. Über jeden Nocken 62 kann sich der Kippwinkel α der Platine 22 der Scheibenwischvorrichtung 10 um ein Winkelgrad verändern. Insbesondere kann an dem Drehkörper 50 eine Nase radial angeordnet sein, welche mit einer korrespondierenden, am Rastabschnitt 56 angeordneten, weiteren Nase 76 deckungsgleich ist, wenn sich der Kippwinkel α in der Null- oder Mittelstellung oder auch einer anderen definierten Stellung befindet.

## Patentansprüche

1. Scheibenwischvorrichtung (10), insbesondere für ein Kraftfahrzeug, mit einer Platine (22), einem ersten Befestigungsmittel (34), einem zweiten Befestigungsmittel (36) und einem dritten Befestigungsmittel (44), welches außerhalb einer, durch das erste und zweite Befestigungsmittel (34, 36) gebildeten Achse angeordnet ist, wobei das erste, zweite und dritte Befestigungsmittel (34, 36, 44) zur Befestigung Platine (22) am Kraftfahrzeug vorgesehen sind, derart, dass das dritte Befestigungsmittel (44) Verstellmittel (46) zur Verkippung der Platine (22) um einen Kippwinkel (α) in einer senkrecht zur Achse gebildeten Kippebene (E), sowie Fixierungsmittel (58) zur Fixierung des Kippwinkels (α) aufweist, **dadurch gekennzeichnet, dass** das Fixierungsmittel (58) im wesentlichen senkrecht zur Kippebene (E), fixiert.

2. Scheibenwischvorrichtung (10), nach Anspruch 1, **dadurch gekennzeichnet, dass** die Fixierung durch eine Kraft (F) erfolgt, deren Wirkrichtung im Wesentlichen senkrecht zur Kippebene (E) wirkt.

3. Scheibenwischvorrichtung (10), nach mindestens einem der vorhergehenden Ansprüche, **dadurch gekennzeichnet, daß** ein Drehkörper (50) vorgesehen ist, der zur Verkippung der Platine (22) in der Kippebene (E) drehbar ist.

4. Scheibenwischvorrichtung (10), nach Anspruch 3, **dadurch gekennzeichnet, daß** das Fixierungsmittel (58) den Drehkörper (50) kraft- und/oder formschlüssig fixiert.

5. Scheibenwischvorrichtung (10) nach mindestens einem der vorhergehenden Ansprüche, **dadurch gekennzeichnet, dass** das Fixierungsmittel (58) als Schraub-, Clip-, Steck- oder Bügelverbindung ausgebildet ist, die mit einer Öffnung (66) zusammenwirkt.

6. Scheibenwischvorrichtung (10), nach mindestens einem der vorhergehenden Ansprüche , **dadurch gekennzeichnet, dass** das dritte Befestigungsmittel (44) nur vorbestimmte Kippwinkel (α) zuläßt und Rastmittel (22, 24) zur Vorbestimmung der vorbestimmten Kippwinkel (α) vorgesehen sind.

7. Scheibenwischvorrichtung (10) nach Anspruch 5 **dadurch gekennzeichnet, dass** die Rastmittel (22, 24) durch Rastnocken (62) und Raststutzen (54) gebildet sind.

8. Scheibenwischvorrichtung (10) nach Anspruch 3, **dadurch gekennzeichnet, dass** die Rastnocken (62) und Raststutzen (54) in der Kippebene (E) gegeneinander bewegbar sind.

9. Scheibenwischvorrichtung (10) nach mindestens einem der vorhergehenden Ansprüche, **dadurch gekennzeichnet, dass** der Drehkörper (50) ein Drehelement (60) aufweist, das außerhalb der Drehachse des Drehkörpers (50) angeordnet ist und mit der Platine (22) in Wirkverbindung steht.

10. Scheibenwischvorrichtung (10) nach mindestens einem der vorhergehenden Ansprüche, **dadurch gekennzeichnet, dass** der Drehkörper (50) eine Drehhilfe (64), insbesondere einen Hebel, aufweist.

## Claims

1. Windscreen wiper device (10), in particular for a motor vehicle, with a plate (22), a first fastening means (34), a second fastening means (36) and a third fastening means (44) which is arranged outside an axis formed by the first and second fastening means (34, 36), wherein the first, second and third fastening means (34, 36, 44) are provided for fastening the plate (22) to the motor vehicle, such that the third fastening means (44) has adjusting means (46) for tilting the plate (22) by a tilting angle (α) in a tilting plane (E) formed perpendicularly to the axis, and has fixing means (58) for fixing the tilting angle (α), **characterized in that** the fixing means (58) provides fixing substantially perpendicularly to the tilting plane (E).

2. Windscreen wiper device (10) according to Claim 1, **characterized in that** the fixing is carried out by a force (F), the direction of action of which acts substantially perpendicularly to the tilting plane (E).

3. Windscreen wiper device (10) according to at least one of the preceding claims, **characterized in that** a rotating body (50) is provided, the rotating body being rotatable in order to tilt the plate (22) in the tilting plane (E).

4. Windscreen wiper device (10) according to Claim 3, **characterized in that** the fixing means (58) fixes the rotating body (50) in a frictional and/or interlocking manner.

5. Windscreen wiper device (10) according to at least one of the preceding claims, **characterized in that** the fixing means (58) is designed as a screw, clip, plug-in or clamping connection which interacts with an opening (66).

6. Windscreen wiper device (10) according to at least one of the preceding claims, **characterized in that** the third fastening means (44) permits only predetermined tilting angles (α), and latching means (22, 24) are provided for predetermining the predetermined tilting angles (α).

7. Windscreen wiper device (10) according to Claim 5, **characterized in that** the latching means (22, 24) are formed by latching cams (62) and latching connectors (54).

8. Windscreen wiper device (10) according to Claim 3, **characterized in that** the latching cams (62) and latching connectors (54) are movable relative to one another in the tilting plane (E).

9. Windscreen wiper device (10) according to at least one of the preceding claims, **characterized in that** the rotating body (50) has a rotating element (60) which is arranged outside the axis of rotation of the rotating body (50) and is operatively connected to the plate (22).

10. Windscreen wiper device (10) according to at least one of the preceding claims, **characterized in that** the rotating body (50) has a rotational aid (64), in particular a lever.

## Revendications

1. Dispositif d'essuie-glace (10), en particulier pour un véhicule automobile, comprenant une platine (22), un premier moyen de fixation (34), un deuxième moyen de fixation (36) et un troisième moyen de fixation (44), qui est disposé en dehors d'un axe formé par le premier et le deuxième moyen de fixation (34, 36), les premier, deuxième et troisième moyens de fixation (34, 36, 44) étant prévus pour la fixation de la platine (22) sur le véhicule automobile, de telle sorte que le troisième moyen de fixation (44) présente des moyens de réglage (46) destinés à faire basculer la platine (22) autour d'un angle de basculement (α) dans un plan de basculement (E) formé perpendiculairement à l'axe, ainsi que des moyens de fixation (58) pour la fixation de l'angle de basculement (α), **caractérisé en ce que** le moyen de fixation (58) fixe essentiellement perpendiculairement au plan de basculement (E).

2. Dispositif d'essuie-glace (10) selon la revendication 1, **caractérisé en ce que** la fixation s'effectue par une force (F) dont la direction d'action agit essentiellement perpendiculairement au plan de basculement (E).

3. Dispositif d'essuie-glace (10), selon au moins l'une quelconque des revendications précédentes, **caractérisé en ce qu'**un corps rotatif (50) est prévu, lequel peut tourner dans le plan de basculement (E) en vue du basculement de la platine (22).

4. Dispositif d'essuie-glace (10) selon la revendication 3, **caractérisé en ce que** le moyen de fixation (58) fixe le corps rotatif (50) par engagement par force et/ou par coopération de forme.

5. Dispositif d'essuie-glace (10) selon au moins l'une quelconque des revendications précédentes, **caractérisé en ce que** le moyen de fixation (58) est réalisé sous forme de connexion par vissage, enclipsage, enfichage ou bridage, qui coopère avec une ouverture (66).

6. Dispositif d'essuie-glace (10) selon au moins l'une quelconque des revendications précédentes, **caractérisé en ce que** le troisième moyen de fixation (44) ne permet que des angles de basculement prédéterminés (α), et des moyens d'encliquetage (22, 24) sont prévus pour prédéterminer l'angle de basculement prédéterminé (α).

7. Dispositif d'essuie-glace (10) selon la revendication 5, **caractérisé en ce que** les moyens d'encliquetage (22, 24) sont formés par des cames d'encliquetage (62) et des tubulures d'encliquetage (54).

8. Dispositif d'essuie-glace (10) selon la revendication 3, **caractérisé en ce que** les cames d'encliquetage (62) et les tubulures d'encliquetage (54) peuvent se déplacer les unes par rapport aux autres dans le plan de basculement (E).

9. Dispositif d'essuie-glace (10) selon au moins l'une quelconque des revendications précédentes, **caractérisé en ce que** le corps rotatif (50) présente un élément rotatif (60), qui est disposé en dehors de l'axe de rotation du corps rotatif (50) et est en liaison fonctionnelle avec la platine (22).

10. Dispositif d'essuie-glace (10) selon au moins l'une quelconque des revendications précédentes, **caractérisé en ce que** le corps rotatif (50) présente un auxiliaire de rotation (64), notamment un levier.
